Europäisches Patentamt

European Patent Office

Office européen des brevets

(11) Veröffentlichungsnummer: **0 308 526 B1**

(12) **EUROPÄISCHE PATENTSCHRIFT**

(45) Veröffentlichungstag der Patentschrift: **19.02.92**

(21) Anmeldenummer: **87113887.1**

(22) Anmeldetag: **23.09.87**

(51) Int. Cl.⁵: **G01H 3/00**

(54) **Geräuschbeurteilung von Fahrzeugpumpen.**

(43) Veröffentlichungstag der Anmeldung:
**29.03.89 Patentblatt 89/13**

(45) Bekanntmachung des Hinweises auf die
Patenterteilung:
**19.02.92 Patentblatt 92/08**

(84) Benannte Vertragsstaaten:
**DE FR GB IT SE**

(56) Entgegenhaltungen:

**PROCEEDINGS OF THE NATIONAL CONFERENCE ON FLUID POWER, Cleveland, Ohio,
26.-28. Oktober 1976, Band 30, Seiten 37-53;
A. CROOK et al.: "The effect of circuit interactions on the noise emitted by hydraulic
pumps"**

**PROCEEDINGS OF THE NATIONAL MEETING
ON FLUID POWER, 30th Annual Meeting,
12.-14. November 1974, Band 28, Seiten
331-370; K.L. JOHNSON: "Testing methods
for hydraulic pumps and motors"**

**TECHNISCHES MESSEN ATM, Band 45, Nr. 5,
Mai 1978, Seiten 189-194, München, DE; H.
HARTWIG et al.: "Akustische Messverfahren
in der Automobilentwicklung"**

(73) Patentinhaber: **LuK Fahrzeug-Hydraulik GmbH
& Co. KG
Zeppelinstrasse 3
W-6380 Bad Homburg(DE)**

(72) Erfinder: **Lauth, Hans Jürgen,
Philipp-Reis-Strasse 1
W-6393 Wehrheim1(DE)**
Erfinder: **Kampf, Herbert
Schlesierstrasse 8
W-6382 Friedrichsdorf(DE)**

(74) Vertreter: **Gleiss, Alf-Olav, Dipl.-Ing. et al
Patentanwaltskanzlei Gleiss & Grosse Silberburgstrasse 187
W-7000 Stuttgart 1(DE)**

## Beschreibung

Die Erfindung betrifft ein verfahren sowie eine Anordnung zur Geräuschbeurteilung von Fahrzeugpumpen.

In Fahrzeugen eingebaute Pumpen, beispielsweise Lenkhilfpumpen, tragen zum Gesamtgeräuschpegel des Fahrzeugs bei. Solange die Pumpengeräusche im Gesamtgeräuschpegel untergehen, fallen sie im Betrieb des Fahrzeugs nicht weiter auf und werden von den Autoproduzenten toleriert. Wenn jedoch das Pumpengeräusch von Spezialisten (mit sogenannten "goldenen Ohren") aus dem Gesamtgeräuschpegel herausgehört wird, führt dies zu Beanstandungen, ohne daß dies mit der absoluten Höhe des Geräuschs etwas zu tun hätte. Es kann also vorkommen, daß Pumpen mit absolut höherem Geräuschpegel von den Autoherstellern toleriert werden, solange deren Geräusche im Sonstigen Gesamtgeräuschpegel des Fahrzeugs untergehen. Umgekehrt können Pumpengeräu sche mit relativ niedriger Höhe noch reklamiert werden, wenn sich diese über das Geräuschfrequenzspektrum des Fahrzeugs erheben.

Es ist ein Verfahren bekannt (PROCEEDINGS OF THE NATIONAL MEETING ON FLUID POWER, 30th Annual Meeting, 12.-14. November 1974, Band 28, Seiten 331-370; K.L. JOHNSON: "Testing methods for hydraulic pumps and motors"), bei dem der an die Umgebungsluft abgegebene Schallpegel einer Pumpe auf verschiedene Weisen mehr oder weniger genau gemessen werden kann. Beispielsweise ist es möglich, die Geräuschentwicklung einer Pumpe in einem schalltoten Raum oder in einem Echoraum zu messen und dabei den Schallpegel in Abhängigkeit von der Frequenz zu erfassen. Die auf diese Weise gewonnen Erkenntnisse erlauben zwar eine allgemeine Aussage über die Geräuschentwicklung einer Pumpe. Eine Vorhersage über die im Inneren eines mit einer derartigen Pumpe ausgerüsteten Kraftfahrzeugs auftretenden Geräusche lassen sich jedoch allenfalls grobe Vorhersagen treffen. Letztlich können auch nach einem derartigen Verfahren getestete Pumpen zu Beanstandungen von Kraftfahrzeugherstellern führen, die möglicherweise teure Konstruktionsänderungen an Pumpen erzwingen.

Desweiteren ist ein Verfahren zur Bestimmung des akustischen Übertragungsverhaltens einer Kraftfahrzeugkarosserie bekannt (Technisches Messen ATM, Band 45, Nr. 5, Mai 1978, Seiten 189-194, München, DE; H. HARTWIG et al.: "Akustische Meßverfahren in der Automobilentwicklung"), mit dem das akustische Verhalten einer Karosserie bei Einleitung von Schwingungen bestimmt werden kann. Dabei können sowohl Schwingungsimpulse als auch periodische Schwingungen Berücksichtigung finden. Es ist jedoch praktisch nicht vorhersehbar, wie eine Karosserie auf das Geräuschspektrum einer Pumpe in allen Frequenzbereichen anspricht, und wie letztlich die Pumpengeräusche im Inneren des Fahrzeugs wahrgenommen werden. Auf diese Weise lassen sich also Beanstandungen nicht vermeiden.

Schließlich sind ein Verfahren und eine Anordnung zur Geräuschbewertung von Pumpen bekannt (PROCEEDINGS OF THE NATIONAL CONFERENCE ON FLUID POWER, Cleveland, Ohio, 26.-28. Oktober 1976, Band 30, Seiten 37-53; A. CROOK et al.: "The effect on circuit interactions on the noise emitted by hydraulic pumps"), bei dem die an die Umgebungsluft abgegebenen Geräusche einer Pumpe gemessen werden können. Nach diesem Verfahren wird der im Betrieb der Pumpe auftretende Schallpegel in Abhängigkeit von der Frequenz erfaßt. Die Messungen finden in einem schalltoten Raum statt, wobei Antrieb und die größten Teile des hydraulischen Kreislaufes, mit dem die Pumpe verbunden ist, außerhalb dieses Raumes angeordnet sind. Es lassen sich also wiederum letztlich nur die absolut abgegebenen Geräusche der Pumpe messen. Eine Vorhersage der Übertragung der entstehenden Geräusche auf das Fahrzeuginnere ist allenfalls grob abschätzbar, so daß sich letztlich Vorhersagen über das Verhalten der Pumpe im Zusammenhang mit einem Fahrzeug nicht mit ausreichender Sicherheit treffen lassen.

Es ist daher Aufgabe der Erfindung, ein Verfahren sowie eine Anordnung zur Geräuschbeurteilung von Fahrzeugpumpen zu schaffen, die die Beurteilung des Geräuschverhaltens von Fahrzeugpumpen, insbesondere von Lenkhilfpumpen, auf dem Prüfstand ermöglichen.

Die gestellte Aufgabe wird gemäß den Verfahrensschritten des Anspruchs 1 gelöst. Dabei kann man sich des bekannten Frequenzanalysators und damit erstellter Kurven als Mittel zur Durchführung des Verfahrens bedienen. Es ist aber auch möglich, eine spezielle Prüfanordnung zu benutzen, wie sie in Anspruch 2 umrissen ist, um zu einer äußerst raschen Beurteilung zu gelangen, ob die gerade getestete Pumpe die Zulässigkeitskriterien erfüllt oder nicht.

Zu diesem Zweck wird die zu prüfende Pumpe mit ihrer Antriebswelle an einen Antriebsmotor sowie mit ihrer Auslaßleitung an einen hydraulischen Testkreislauf angeschlossen. Der hydraulische Testkreislauf weist eine durch einen drosselförmigen Widerstand abgeschlossene kurze Druckleitung und eine Druckaufnehmereinrichtung auf, die an einer oder mehreren bestimmten Stellen der Druckleitung angeschlossen ist und hydraulische Druckpulsationen in elektrische Spannungen umzuwandeln ermöglicht. Eine angeschlossene Gleichstromsperre eliminiert den Gleichstromanteil der elektrischen Spannung und ist mit einer Reihe von Filtern für unterschiedliche Frequenzbereiche verbunden. Je nach ihrem Frequenzbereich werden die Druckpulsationen unterschiedlich gedämpft und damit bewertet.

Wenn die Pumpe in unterschiedliche Fahrzeuge eingebaut werden soll, kann der Test für das System Pumpe-Fahrzeug angepaßt durchgeführt werden. Hierfür ist das Durchlaßverhalten jedes Filters zur Bewertung der durchgelassenen Signalfrequenz auswählbar oder einstellbar. Jede Signalfrequenz ist an eine Wechselspannungsmeßeinrichtung anschließbar, deren Ausgangswert ein Maß für die Geräuschbewertung ist.

Das erfindungsgemäße System macht Gebrauch von der Tatsache, daß die Pumpe, speziell die Lenkhilfpumpe, nur in bestimmten Frequenzbereichen zu hören ist, die als die Empfindlichkeitsbereiche bezeichnet werden, während in dazu benachbarten Frequenzbereichen die Pumpe nicht hörbar ist, obzwar sie auch dort mit Geräuschfrequenzen vertreten ist. Absolut gesehen können diese Geräuschfrequenzen sogar einen höheren Pegel aufweisen als in dem Empfindlichkeitsbereich, jedoch gehen solche Geräusche in dem Gesamtgeräuschspektrum unter.

Für einen Wagentyp der gehobenen Mittelklasse hat es sich herausgestellt, daß ein erstes Bandpassfilter im Bereich Brummen und ein zweites Bandpassfilter im Bereich Pfeifen ausreicht, die Empfindlichkeitsbereiche des Gesamtgeräuschspektrums abzudecken.

Das System Pumpe-kurze Druckleitung, an welchem die Druckaufnehmereinrichtung angeschlossen ist, stellt ein schwingungsfähiges Gebilde dar, in welchem die Druckleitung unvermeidbar wie ein Resonator wirkt, in welchem sich stehende Wellen oder Schwingungen ausbilden können. Die Länge der Druckleitung wird deshalb so gewählt, daß die Resonanzfrequenzen unkritisch sind, d. h. möglichst keinen störenden Einfluß auf die originär von der Pumpe erzeugten Geräuschfrequenzen ausüben, z. B. weil sie oberhalb dieser zu messenden Frequenzen liegen. Ferner wird die Anschlußstelle der Druckaufnehmereinrichtung so gelegt, daß sie sich nicht in einem Schwingungsknoten oder in einem Schwingungsbauch der hauptsächlich stehenden Welle befindet. Für einen Wagen der gehobenen Mittelklasse war die Länge der Druckleitung im bereich von 120 bis 200 mm am günstigsten. Die Anschlußstelle der Druckaufnehmereinrichtung ist benachbart 1/4 oder 3/4 Länge der Druckleitung angeordnet.

Gemäß der Erfindung wird der besondere Vorteil erzielt, daß Pumpen, die wegen Geräuschentwicklung vom Fahrzeughersteller beanstandet werden könnten, bereits in der Fertigungsendkontrolle erkannt werden, also vor Auslieferung an den Kunden. Reklamationen können so auf ein Minimum reduziert werden. Außerdem kann man sich mit dem Autohersteller auf eine objektive Bewertung der Pumpengeräusche einigen, so daß die subjektive Beurteilung ("goldene Ohren") entfallen kann.

Ein Ausführungsbeispiel der Erfindung wird anhand der Zeichnung beschrieben. Dabei zeigt:

Fig. 1 einen Prüfstand,
Fig. 2 eine Einzelheit daraus,
Fig. 3 ein Druckpulsationsspektrum der Fahrzeugpumpe (Druckpegel über der Frequenz),
Fig. 4 ein Luftschallpegelspektrum in einem Fahrzeug bei laufender Pumpe,
Fig. 5 eine Transferfunktion,
Fig. 6 ein Fahrzeuggeräuschspektrum ohne Pumpe,
Fig. 7 eine Zulässigkeitskurve,
Fig. 8 ein Diagramm der Filterdurchlaßlinie einer ersten Filtereinrichtung über der Frequenz,
Fig. 9 die Filterdurchlaßlinie einer zweiten Filtereinrichtung über der Frequenz,
Fig. 10 die Filterdurchlaßlinie eines dritten Filters und
Fig. 11 eines vierten Filters

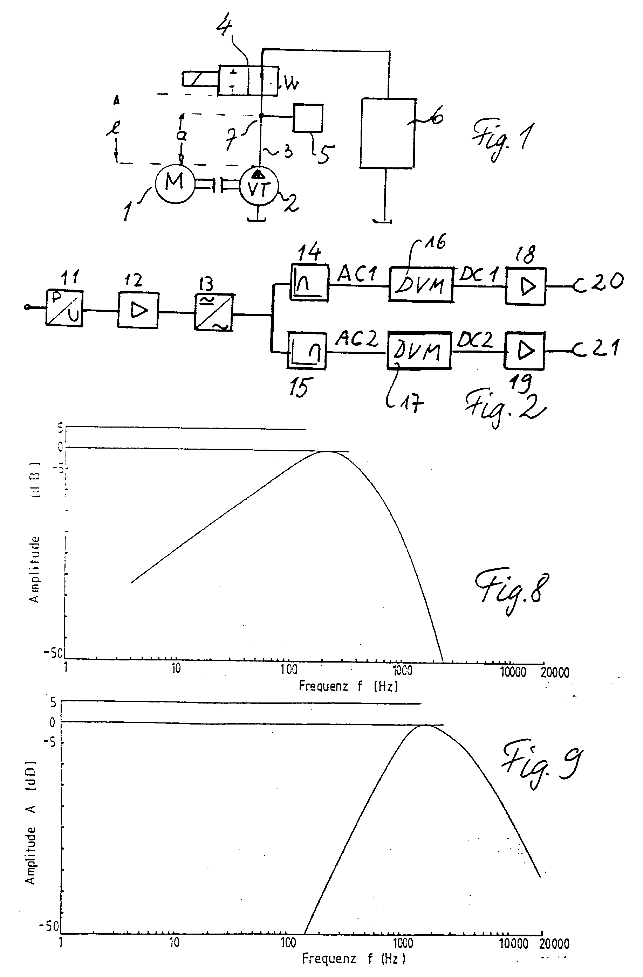

In Fig. 1 ist der Hydraulikkreislauf und die elektrische Meßkette dargestellt, die zusammen das Testgerät zur Geräuschbeurteilung von Fahrzeugpumpen ausmachen. Der Hydraulikkreislauf enthält einen Antriebsmotor 1, an dem die zu testende Pumpe 2 angekoppelt werden kann, die eingangsseitig mit einem Reservoir und ausgangsseitig mit einer kurzen Druckleitung 3 der Länge 1 verbundne ist. Diese ist mittels eines drosselförmigen Widerstandes 4 abgeschlossen, der hier als Ventil ausgebildet ist. Im Abstand a ≈ 3/4 l, gerechnet vom Pumpenauslaß aus, ist eine elektrische Meßkette 5 angeschlossen, die insgesamt noch einmal in Fig. 2 dargestellt ist. Das Ventil 4 weist eine Sperrstellung und eine Durchlaßstellung auf, wobei die Sperrstellung für den Test und die Durchlaßstellung für einen weiteren Prüfkreislauf 6 ausgenutzt werden kann, in welchem der Pumpendurchfluß, der Druck und die Temperatur der Flüssigkeit bestimmt werden.

Die elektrische Meßkette 5 weist einen Druck/Spannungswandler 11, einen Verstärker 12, eine Gleichstromsperre 13, eine erste Filtereinrichtung 14, eine zweite Filtereinrichtung 15, ein erstes Wechselstrommeßgerät 16, ein zweites Wechselstrommeßgerät 17 sowie Verstärker 18,19 und Signalausgänge 20, 21 auf. Bei den Filtereinrichtungen 14, 15 handelt es sich um speziell angepaßte Bandpaßfilter oder Filterkombinationen, die das gewünschte Durchlaßverhalten zeigen.

Die Länge l der kurzen Druckleitung 3 wird so ausgewählt, daß stehende Wellen das Meßverfahren möglichst wenig beeinträchtigen. Eine Länge von 120 bis 200 mm ist brauchbar, und eine Länge von 160 mm hat sich als günstig herausgestellt. Die Anschlußstelle 7 der Druckaufnehmereinrichtung 11 an die Druckleitung 3 ist so gelegt, daß weder Wellenknoten noch Wellenbäuche der ersten stehenden Welle in der Druckleitung 3 angezapft werden. Im gewählten Beispiel beträgt der Abstand a zwischen der zu testenden Pumpe 2 und der Abgriffstelle 7 a = 123 mm. Durch diese Wahl von 1 und a wird eine reproduzierbare Messung der Druckpulsationen mittels des Druckaufnehmers 11 ermöglicht. Diese Druckpulsationen werden durch das Pumpverhalten der Flügel der Fahrzeugpumpe und das dynamische Verhalten des Druckbegrenzungsventils in der Pumpe erzeugt und dadurch ausgelöst, daß das Ventil 4 geschlossen wird. Das Druckbegrenzungsventil hat die Tendenz, in Richtung der Öffnungs- und der Schließstellung innerhalb etwa 10 ms zu pendeln. Infolge dessen schwankt der Auslaßdruck der Pumpe 2, je nach der Güte der Pumpe, zwischen 1 und 15 bar und mehr. Dadurch werden heftige Schwingungen angeregt, die, über die Frequenz gesehen, das in Fig. 3 dargestellte Aussehen haben können. Die Charakteristik ist mit einer Lenkhilfpumpe der Anmelderin des Typs VTP 62 bei einer Antriebsdrehzahl n von 800 U/min aufgenommen, bei einer Öltemperatur von 80°C und einem Auslaßdruck PA = 80 bar. Der Meßaufbau entspricht dem in Fig. 1 gezeigten Aufbau, jedoch ist anstelle der Filtereinrichtungen 14 und 15 ein Schmal bandanalysator verwendet worden, welcher sehr hohe Flankensteilheiten aufweist. Die vorstechenden Maxima der Pegeleffektivwerte sind mit $f_z$ sowie $f_0$ bis $f_6$ bezeichnet worden.

Wenn man eine Schallpegelmessung im Innenraum eines Fahrzeugs unter Beachtung obiger Parameter vornimmt, erhält man ein Frequenzspektrum, wie in Fig. 4 dargestellt. Die Werte sind gemäß der Transferfunktion (Fig.5) verkleinert, d. h. die Transferfunktion kann durch Division der Pegelwerte in Fig. 4 durch die Pegelwerte in Fig. 3 ermittelt werden. Fig. 6 zeigt das Fahrzeuggeräuschspektrum im Innenraum infolge des Motorbetriebes, jedoch ohne Pumpe. Überlagert man die Kurven aus Fig. 4 und 6, so erhält man das Gesamtgeräuschspektrum im Fahrzeuginneren. Dabei heben sich die Frequenzen $f_M$ - (Motorhauptgeräusch) und $f_1$, $f_2$, $f_3$ - (Pumpengeräusche) aus dem Hintergrund ab. Die Frequenzen $f_0$, $f_4$, $f_5$ und $f_6$ werden offenbar weniger gut durch das Fahrzeug in den Innenraum geleitet. Die Frequenz $f_Z$ wird durch Flügelunregelmäßigkeiten der Pumpe verursacht und wird durch das Motorgeräusch überdeckt. Der Bereich der Frequenzen $f_1$, $f_2$, $f_3$ wird als "Empfindlichkeitsbereich" bezeichnet, da hier die Transferfunktion des Fahrzeugs die größten Werte zeigt, ohne daß eine Geräuschüberdeckung infolge des Motors stattfindet.

Wenn man die Umhüllende der Pegelwerte in Fig. 6 und die inverse Funktion der Fig. 5 (Kehrwerte der Transferfunktion, d. h. Dämpfungsfunktion) zusammensetzt, kommt man zu dem Kurvenverlauf der Fig. 7, welche angibt, bis zu welchen Pegelwerten Pumpengeräusche toleriert werden können, die man am Prüfstand gemäß Fig. 1, jedoch mit Schmalbandanalysator, mißt. Im vorliegenden Beispiel liegen die, Frequenzen $f_1$, $f_2$ und $f_3$ über der Toleranzgrenze, d.h. die geprüfte Pumpe 2 entspricht nicht den Anforderungen.

Die Anordnung nach Fig. 1 und 2 erzeugt automatisch eine Bewertung der gemessenen Pegelwerte, indem die gemessenen Pegelwerte je nach ihrer Frequenz in Abhängigkeit von der Toleranzkurve (Fig. 7) unterschiedlich gedämpft werden. Hierzu sind die Filterkombinationen 14, 15 in die Meßkette eingefügt worden. Wenn der durchgelassene Meßpegel einen vorgegebenen Wert übersteigt, wird die Pumpe als fehlerhaft bewertet.

Die Transferfunktion und das vom Motor erzeugte Geräusch sind für jeden Fahrzeugtyp unterschiedlich. Demgemäß muß man unterschiedliche Filterkombinationen 14, 15 einsetzen, um die Toleranzgrenze nachzubilden. Fig. 8 bis 11 zeigen unterschiedliche Filtercharakteristiken für diese Fälle.

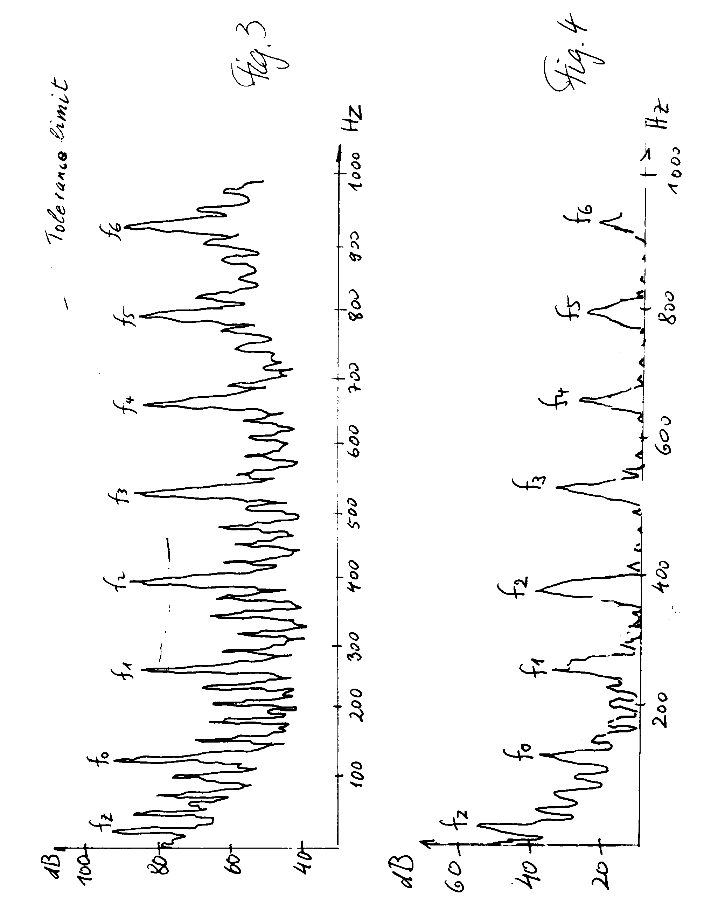

Fig. 8 und 9 zeigen das Durchlaßverhalten der Filtereinrichtungen 14 bzw. 15, die sich im Bereich zwischen 150 bis 2500 Hz überschneiden. Dadurch können mit der Filter-kombination 14 und 15 alle drei störenden Frequenzspitzenwerte $f_1$, $f_2$ und $f_3$ erfaßt und bewertet werden. Diese Bewertung erfolgt durch das Dämpfungsverhalten dieser Filterkombination 14, 15. Wie ersichtlich (Fig. 8), hat das erste Filter 14 einen maximalen Durchlaß bei der Frequenz von etwa 200 Hz und Filterdurchlaß bzw. Dämpfungsflanken, die auf den Dämpfungswert von -20 dB bei den Frequenzen von etwa 10 bzw. 1000 Hz stoßen. Das Filter 15 (Fig. 9) hat einen maximalen Durchlaß bei der Frequenz von etwa 1800 Hz, wobei die Filterflanken auf den Wert von -20 dB bei etwa 300 bzw. 10 000 Hz stoßen.

Im einzelnen erfolgt die Messung wie folgt: Durch Erregen des Ventils 4 wird die Druckleitung 3 geschlossen, das Druckbegrenzungsventil der Pumpe 2 spricht an und erzeugt Druck-pulsationen, die von der Druckaufnehmereinrichtung 5 aufgenommen und in elektrische Spannungen umgewandelt werden. Diese werden durch die Verstärker 12 verstärkt und der Gleichstromsperre 13 zugeführt, welche den Gleichstromanteil der elektrischen Spannung eliminiert und diese den Filtereinrichtungen 14 und 15 zuführt. Diese lassen jeweils eine Signalfrequenz Ac1 und Ac2 durch, welche den Wechselstrommeßgeräten 16 und 17 zugeführt werden. Diese bilden eine Meßspannung DC1 bzw. DC2, welche durch die Verstärker 18 bzw. 19 verstärkt werden und den Auslässen 20 bzw. 21 zugeführt werden. Wenn der Signalpegel beim Auslaß 20 über einem vorgegebenen Wert liegt, dann wird die getestete Pumpe 2 wegen Brummens oder Heulens ausgeschieden. Wenn der Ausgangswert bei 21 über einem vorgegebenen Wert liegt, dann wird die Pumpe wegen Zischens oder Pfeifens ausgeschieden.

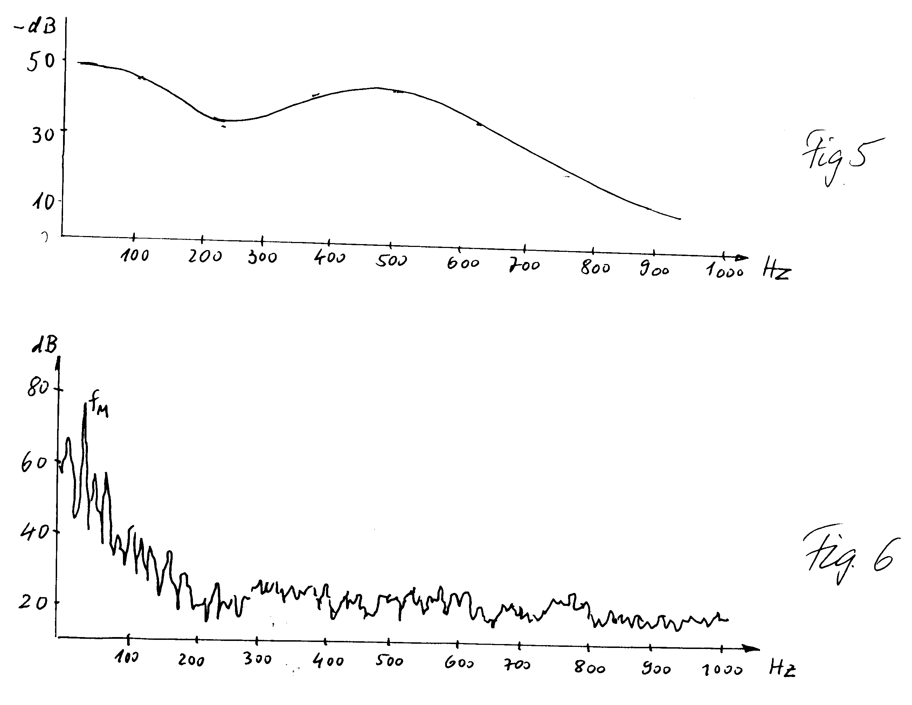

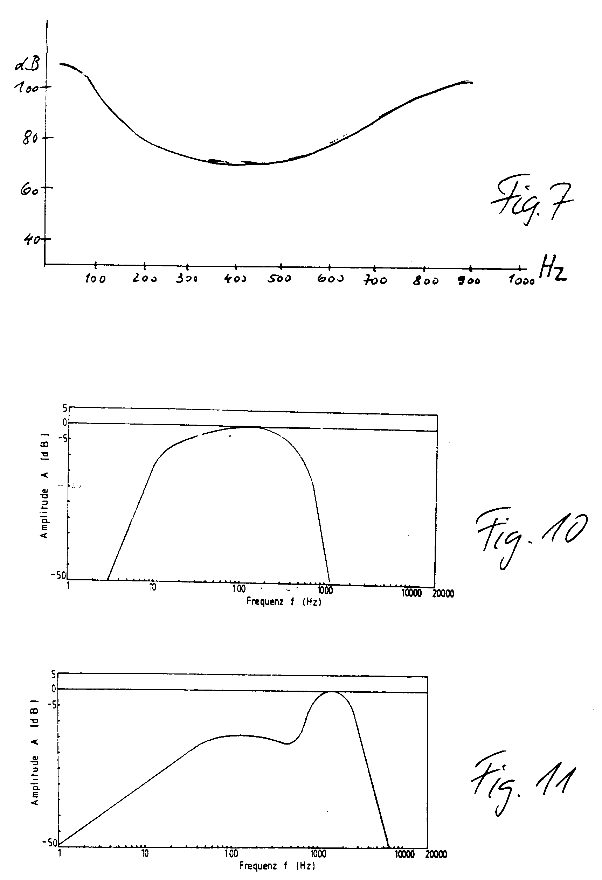

Wie bereits erwähnt, wird der Bandpasscharakter der Filtereinrichtungen 14 und 15 von der Art und dem Typ des Fahrzeugs abhängig gemacht, in welchem die Pumpe eingebaut wird. Wenn demgemäß niedrige Frequenzen stärker als höhere Frequenzen übertragen werden, wird man das Durchlaßverhalten der Filter für niedrige Frequenzen erhöhen (Fig. 10), um der größeren Empfindlichkeit des Fahrzeuges für niedrige Frequenzen Rechnung zu tragen. Wenn das Fahrzeug die niedrigen Frequenzen stärker dämpft und die höheren Frequenzen bevorzugt in das Wageninnere überträgt, dann erhöht man das Durchlaßverhalten im höheren Frequenzbereich (Fig. 11). Auf diese Weise kann man das Übertragungsverhalten für Frequenzen des jeweiligen Fahrzeugs simulieren oder bewerten. Man erfaßt dabei auch den nach außen abgegebenen Luftschall in etwa.

Man kann den Meßaufbau auch an die Größe der zu testenden Pumpen anpassen. Die Pumpe 2 bildet zusammen mit der Druckleitung 3 ein System von Räumen mit Druckflüssigkeit, in denen sich der erzeugte Schall ausbreitet. Verständlicherweise kommt es auch auf die relative Größe dieser Räume zueinander an, wenn Meßverzerrungen vermieden werden sollen. Gute Ergebnisse wurden erzielt, wenn das Volumen der Druckleitung 3 höchstens dem eingeschlossenen Volumen auf der Druckseite der Pumpe 2 ist. Zur Prüfung der Lenkhilfpumpe des Typs VTPG2 der Anmelderin ist ein Innendurchmesser von 8 mm des Druckrohrs 3 verwendet worden, welches mit möglichst starren Wänden (Stahl) ausgestattet ist.

**Patentansprüche**

1. Verfahren zur Geräuschbewertung von Fahrzeugpumpen, bei dem der in der die Fahrzeugpumpe umgebenden Luft auftretende Schallpegel in Abhängigkeit von der Frequenz während des Betriebs der Fahrzeugpumpe gemessen wird, **gekennzeichnet durch** folgende Schritte:

    - zur Erfassung eines Luftschallpegelspektrums wird bei stehendem Motor des Fahrzeugs der in der Luft auftretende Schallpegel im Inneren eines mit der Fahrzeugpumpe versehenen Fahrzeugs gemessen;
    - zur Erfassung eines Druckpulsationsspektrums werden die im Betrieb der Pumpe in Zusammenwirkung mit einem Druckbegrenzungsventil auftretenden Druckpegel in Abhängigkeit von der Frequenz erfaßt;
    - zur Bestimmung einer Transferfunktion werden die im Fahrzeuginneren gemessenen schallpegelwerte durch die im Betrieb der Pumpe gewonnenen Druckpegelwerte dividiert;
    - bei laufendem Motor des Fahrzeugs, jedoch ohne Inbetriebnahme der zu bewertenden Fahrzeugpumpe wird zur Erfassung des Fahrzeuggeräuschspektrums das Geräuschspektrum im Inneren des Fahrzeugs erfaßt;
    - durch Zusammensetzen der Pegelwerte des Fahrzeuggeräuschspektrums und der inversen Transferfunktion wird die Toleranzgrenze für die noch tolerierbaren schallpegelwerte der Fahrzeugpumpe bestimmt.

2. Anordnung zur Geräuschbewertung von Fahrzeugpumpen (2), die über eine Antriebswelle an einem Antriebsmotor (1) sowie über eine Ein- und Auslaßleitung an einen ein Drosselventil (4) aufweisenden hydraulischen Kreislauf angeschlossen ist, **dadurch gekennzeichnet,** daß der hydraulische Kreislauf als Prüfkreislauf (5) mit einer Druckleitung (3) ausgebildet ist, an die an eine oder mehreren bestimmten stellen ein in der Prüfleitung auftretende hydraulische Druckpulsationen in elektrische Spannungen umwandelnder Druck/Spannungs-Umwandler (11) so angeschlossen ist, daß weder Wellenknoten noch Wellenbäuche der ersten stehenden Welle in der Druckleitung (3) angezapft werden, daß eine Gleichstromsperre (13) vorgesehen ist, die den Gleichstromanteil der elektrischen Spannungen eliminiert und deren Ausgangsspannung an Filtereinrichtungen (14,15) für unterschiedliche Frequenzbereiche weitergeleitet wird, daß jeder Filter-Frequenzbereich einen Empfindlichkeitsbereich des Gesamt-Geräuschspektrums des Fahrzeugs abdeckt, daß das Durchlaßverhalten der Filtereinrichtungen (14,15) zur Bewertung der durchgelassenen Signalfrequenz auswählbar oder einstellbar ist, und daß die am Ausgang der Filter auftretende Signalfrequenz an eine Spannungsmeßeinrichtung (16,17) weiterleitbar ist, deren Ausgangswerte ein Maß für die Geräuschbewertung sind.

**3.** Anordnung nach Anspruch 2,
dadurch gekennzeichnet, daß ein erstes Filter (14) einen Durchlaß-Frequenzbereich mit Bandpasscharakter aufweist, dessen minimale Dämpfung bei 100 bis 500 Hz und dessen maximale Durchlaßamplitude bei etwa 200 Hz liegt.

**4.** Anordnung nach Anspruch 2 oder 3,
dadurch gekennzeichnet, daß ein zweites Filter (15) einen Durchlaßfrequenzbereich mit Bandpasscharakter aufweist, dessen minimale Dämpfung bei 1100 bis 1900 Hz und dessen maximale Durchlaßamplitude bei etwa 1800 Hz liegt.

**5.** Anordnung nach Anspruch 3 und 4,
dadurch gekennzeichnet, daß das erste und zweite Filter (14, 15) einen Durchlaß-Überdeckungsbereich zwischen 150 und 2500 Hz aufweisen, wenn ein Dämpfungswert von -20 dB als Grenzwert des Durchlaßverhaltens angesehen wird.

**6.** Anordnung nach einem der Ansprüche 2 bis 5,
dadurch gekennzeichnet, daß die Länge (1) der Druckleitung (3) im Bereich von 120 bis 200 mm liegt.

**7.** Anordnung nach einem der Ansprüche 2 bis 6,
dadurch gekennzeichnet, daß die Anschlußstelle (7) der Druckaufnehmereinrichtung (11), von der Pumpe (2) aus gerechnet, auf etwa 3/4 Länge der Druckleitung (3) angeordnet ist.

**8.** Anordnung nach einem der Ansprüche 2 bis 7,
dadurch gekennzeichnet, daß das Volumen der Druckleitung (3) höchstens gleich dem eingeschlossenen Volumen auf der Druckseite der Pumpe (2) ist.

**9.** Anordnung nach einem der Ansprüche 2 bis 8,
dadurch gekennzeichnet, daß die Druckleitung (3) einen Innendurchmesser von 8 mm aufweist, mit möglichst starren Wänden ausgestattet ist, 160 mm lang ist und im Abstand von 123 mm, von der Pumpe gerechnet, eine Querbohrung als Anzapfstelle (7) aufweist.

**Claims**

**1.** A method for noise rating vehicle pumps, in which the sound level occurring in the air surrounding the vehicle pump is measured in dependence on the frequency while the vehicle pump is in operation, characterised by the following steps:

- to determine an airborne sound level spectrum, the sound level occurring in the air is measured inside a vehicle provided with the vehicle pump while the vehicle's engine is stationary;
- to determine a pressure pulsation spectrum, the pressure levels occurring while the pump is operating in cooperation with a pressure relief valve are determined in dependence on the frequency;
- to calculate a transfer function, the sound level values measured inside the vehicle are divided by the pressure level values obtained while the pump is operating;
- to determine the vehicle noise spectrum, the noise spectrum is determined inside the vehicle with the engine of the vehicle running, but without starting up the vehicle pump for rating;
- by combining the level values of the vehicle noise spectrum and the inverse transfer function, the tolerance limit of the sound level values of the vehicle pump which are still tolerable is calculated.

**2.** An arrangement for noise rating vehicle pumps (2) which is connected by way of a drive shaft to a drive motor (1) and by way of an inlet and outlet line to a hydraulic circuit containing a throttle valve (4), characterised in that the hydraulic circuit is designed as a test circuit (5) with a pressure line (3) to which a pressure/voltage converter (11) which converts hydraulic pressure pulsations occurring in the test circuit into electrical voltages is connected at one or several specific locations such that neither the nodes nor the antinodes of the first standing wave in the pressure line (3) are tapped, in that there is provided a direct current blocking device (13) which eliminates the direct current component of the electrical voltages and the output voltage of which is passed on to filter devices (14, 15) for different frequency ranges, in that each filter frequency range covers a sensitivity range of the total noise spectrum of the vehicle, in that the pass behaviour of the filter devices (14, 15) is selectable or adjustable for rating the filtered signal frequency, and in that the signal frequency occurring at the output of the filters can be passed on to a voltage measuring device (16, 17) whose output values are a measurement for the noise rating.

**3.** An arrangement according to claim 2, characterised in that a first filter (14) has a pass frequency range with band pass character, the minimum attenuation of which is at 100 to 500 Hz and the maximum pass amplitude at 200 Hz.

4. An arrangement according to claim 2 or 3, characterised in that a second filter (15) has a pass frequency range with band pass character, the minimum attenuation of which is at 1100 to 1900 Hz and the maximum pass amplitude at 1800 Hz.

5. An arrangement according to claim 3 and 4, characterised in that the first and second filter (14, 15) have a pass-overlap range between 150 and 2500 Hz, when an attenuation value of -20 dB is seen as the threshold value of the pass behaviour.

6. An arrangement according to one of claims 2 to 5, characterised in that the length (1) of the pressure line (3) is in the range from 120 to 200 mm.

7. An arrangement according to one of claims 2 to 6, characterised in that the connection point (7) of the pressure receiver device (11), calculated from the pump (2), is located about three quarters of the way along the pressure line (3).

8. An arrangement according to one of claims 2 to 7, characterised in that the volume of the pressure line (3) is at most equal to the enclosed volume on the pressure side of the pump (2).

9. An arrangement according to one of claims 2 to 8, characterised in that the pressure line (3) has an inside diameter of 8 mm, is provided with the most rigid walls possible, is 160 mm long, and has a tranverse bore as a tapping point (7) at a distance, calculated from the pump, of 123 mm.

## Revendications

1. Procédé d'évaluation du bruit émis par des Pompes automobiles, lors duquel le niveau sonore obtenu dans l'air environnant est mesuré en fonction de la fréquence lors du fonctionnement de la pompe automobile, caractérisé par les étapes suivantes:
    - afin d'effectuer la saisie d'un spectre des niveaux de bruit aérien, l'on mesure le niveau sonore existant dans l'air à l'intérieur d'un véhicule équipé de la pompe automobile, le moteur du véhicule étant à l'arrêt;

    - afin de saisir un spectre des pulsations de pression, l'on relève, en fonction de la fréquence, les niveaux de pression générés lors du fonctionnement de la pompe en association avec une soupape de limitation de pression;
    - afin de définir une fonction de transfert, l'on divise les valeurs du niveau sonore mesurées à l'intérieur du véhicule par les valeurs de niveau de pression lues lors du fonctionnement de la pompe;
    - afin de saisir le spectre des bruits du véhicule, l'on relève le spectre des bruits existant à l'intérieur du véhicule, le moteur du véhicule étant en marche, mais sans mettre en marche la pompe automobile à évaluer;
    - en associant les valeurs de niveau sonore du spectre de bruits du véhicule à la fonction inverse de transfert, l'on définit la limite de tolérance des valeurs de niveau sonore encore acceptables émis par la pompe automobile.

2. Dispositif permettant l'évaluation des bruits émis par des pompes automobiles (2) reliées, par l'intermédiaire d'un arbre d'entraînement, à un moteur (1) de propulsion, et raccordées, par l'intermédiaire d'une conduite d'aspiration et d'une conduite de refoulement, à un circuit hydraulique pourvu d'une soupape (4) d'étranglement, caractérisé en ce que le circuit hydraulique est réalisé sous forme d'un circuit d'essai (5) comportant une conduite (3) de pression, sur laquelle est raccordé, à un ou à plusieurs endroits définis, et de telle manière que le piquage ne se fasse ni sur des noeuds d'onde, ni sur des ventres d'onde de la première onde stationnaire à l'intérieur de la conduite (3) de pression, un convertisseur pression/tension (11) qui transforme les pulsations de pression hydrauliques créées à l'intérieur de la conduite d'essai en tensions électriques, en ce qu'un barrage (13) de courant continu est prévu, qui élimine la partie de courant continu des tensions électriques, la tension de sortie de ce barrage étant retransmise à des dispositifs (14, 15) de filtration réglés pour des plages de fréquences différentes, en ce que chaque plage de fréquence des filtres couvre une plage de sensibilité du spectre total des bruits du véhicule, en ce que la caractéristique de passage des dispositifs (14, 15) de filtration peut être sélectionnée ou réglée, afin de permettre l'évaluation de la fréquence passante des signaux, et en ce que la fréquence des signaux obtenue à la sortie des filtres peut être retransmise à un dispositif (16, 17) de mesure de la tension, dont les valeurs de sortie constituent une mesure pour l'évaluation des bruits.

3. Dispositif selon la revendication 2, caractérisé en ce qu'un premier filtre (14) a une plage de passage des fréquences à caractère passe-bande, l'amortissement minimal de cette plage étant de 100 à 500 Hz, et l'amplitude passante maximale se situant aux alentours de 200 Hz.

4. Dispositif selon la revendication 2 ou 3, caractérisé en ce qu'un deuxième filtre (15) a une plage de passage des fréquences à caractère passe-bande, l'amortissement minimal de cette plage étant de 1100 à 1900 Hz, et l'amplitude passante maximale se situant aux alentours de 1800 Hz.

5. Dispositif selon les revendications 3 et 4, caractérisé en ce que les premier et deuxième filtres (14, 15) comportent une zone de recouvrement de la bande passante, qui se situe entre 150 et 2500 Hz, si l'on considère une valeur d'amortissement de -20 dB comme valeur limite de la caractéristique de passage des filtres.

6. Dispositif selon l'une des revendications 2 à 5, caractérisé en ce que la longueur (1) de la conduite (3) de pression se situe entre 120 et 200 mm.

7. Dispositif selon l'une des revendications 2 à 6, caractérisé en ce que le point (7) de raccordement du dispositif capteur (11) de la pression est placé aux 3/4 environ de la longueur de la conduite (3) de pression, à partir de la pompe (2).

8. Dispositif selon l'une des revendications 2 à 7, caractérisé en ce que le volume de la conduite (3) de pression est au maximum égal au volume emprisonné dans la pompe (2), du côté du refoulement de celle-ci.

9. Dispositif selon l'une des revendications 2 à 8, caractérisé en ce que la conduite (3) de pression a un diamètre intérieur de 8 mm, possède des parois aussi rigides que possible, a une longueur de 160 mm et est pourvue, à une distance de 123 mm, à partir de la pompe, d'un piquage transversal constituant le point (7) de raccordement.

*Fig. 1*

*Fig. 2*

*Fig. 8*

*Fig. 9*

Fig. 3

Fig. 4

EP 0 308 526 B1

Fig. 5

Fig. 6

Fig. 7

Fig. 10

Fig. 11